# EUROPEAN PATENT APPLICATION

(11) **EP 4 276 342 A1**
(43) Date of publication of application: **15.11.2023**
(21) Application number: 22382464.0
(22) Date of filing: 13.05.2022
(51) Int. Cl.: F16L 58/08, C02F 1/46, B63B 59/04, C02F 1/461

(54) **ELECTROLYTIC SYSTEM FOR DEFOULING, STRUCTURES COMPRISING SAID SYSTEM AND METHOD FOR DEFOULING A SUBMERGED STRUCTURE**

(71) Applicant: Titanium Technology S.L., 28231 Madrid (ES)
(72) Inventor: SAMANIEGO MIRACLE, Alejandro, Madrid (ES)
(74) Representative: Balder IP Law, S.L.

(57) **Abstract**

Electrolytic system (S) comprising a first substrate (1), the first substrate (1) comprising titanium, wherein a surface (11) of the first substrate (1) intended to be in contact with water is defined in the first substrate (1), a second conductive substrate (2) provided with a surface (21) intended to be in contact with water, the electrolytic system (S) comprising an electrical power source (U), the electrical power source (U) being connected in series between the first (1) and second ( 2) substrate, so that an electrolytic circuit can be established formed by water, the first substrate (1), which operates as anode, the second substrate (2) which operates as cathode, and the electrical power source (U) that provides electrical energy, wherein the power source (U) is configured to provide a current density greater than or equal to 30 mA/m2 on the surface and an anode potential greater or equal to 6V. The invention also relates to ships, pipes, heat exchangers, propellers or any structure that can be submerged provided with the system and a method for defouling a submerged structure with the inventive system.

## Description

### TECHNICAL FIELD

The invention belongs to the field of electrolytic systems for defouling submerged structures by applying currents to the surfaces immerged in the water.

### STATE OF THE ART

Known are in the art electrolytic systems comprising a first substrate, the first substrate comprising titanium, wherein a surface of the first substrate intended to be in contact with water is defined in the first substrate, a second conductive substrate provided with a surface intended to be in contact with water, the electrolytic system comprising an electrical power source, the electrical power source being connected in series between the first and second substrate, so that an electrolytic circuit can be established formed by water, the first substrate, which operates as anode, the second substrate which operates as cathode, and the electrical power source that provides electrical energy.

An example of such an electrolytic system is disclosed in the patent document JP2003328164A which relates to a method for preventing adhesion of marine organism to titanium ships.

This document describes the application to a submerged substrate containing titanium of various potentials (specifically reference tensions with respect to the reference electrode (silver/Silver Chloride in seawater), of the order of 1,2 V_{Ag/AgCl}, with a view to generating species at the anode that kill microorganisms, with a view to reducing fouling.

The document discloses experiments where a 50 mm x 30 mm is immerged for three months, and then the presence of fouling is checked. The experiments, according to the document, show that on the samples at 1,2 V_{Ag/AgCl} no marine organisms were observed.

The inventor of the present application tried to reproduce these results but using bigger plates, in order to obtain realistic measures, since the hull of a boat will typically tens, hundreds or even thousands or square meters exposed to the water. The plates used were of 0,6 m². However, when applying reference tensions of 1,2 - 2 or even 3V_{Ag/AgCl}, the results were poor, and the surface of titanium covered with algae and barnacle suggesting that the electrolytic solution was not viable in a bigger scale and longer periods of time.

### DESCRIPTION OF THE INVENTION

For overcoming the state of the art limitations, the present invention proposes an electrolytic system comprising a first substrate, the first substrate comprising titanium, wherein a surface of the first substrate intended to be in contact with water is defined in the first substrate a second conductive substrate provided with a surface intended to be in contact with water, the electrolytic system comprising an electrical power source, the electrical power source being connected in series between the first and second substrate, so that an electrolytic circuit can be established formed by water, the first substrate, which operates as anode, the second substrate which operates as cathode, and the electrical power source that provides electrical energy, wherein the power source is configured to provide a current density greater than or equal to 30 mA/m² on the surface and an anode potential greater than or equal to 6V.

Thus, as in any electrochemical system, when applying an anode current, the potential of the electrode increases. While applying an anode potential greater than or equal to 6V and a current density greater than or equal to 30 mA/m², a neat decrease in biological fouling on the surface is observed.

With the invention, the drawbacks of the state of the art are resolved, as the inventor has experimentally verified. Specifically, the inventor has been able to verify that the essential parameter that must be controlled is not only the voltage, either that of the circuit or a reference voltage, but also the current density that passes through the surface to be protected.

In the prior art document the potential measurements are specified with respect to a reference electrode, and the tests have been carried out with specific samples. In the initial stages, a working potential of 1.2 V with respect to the silver/silver chloride electrode may initially be associated with a current density capable of affecting biofouling; however, once the growth of oxides associated with the surface anodized, the current density necessary to maintain this working potential was about 2 mA/m2, which has been shown to be insufficient to prevent biological fouling on the electrode surface.

In some embodiments, the system comprises a reference electrode connected to the first substrate and/or the second substrate,

In some embodiments, the system comprises an underlying substrate, the first substrate being attached to the underlying substrate.

In some embodiments the underlying substrate is made of steel, the first substrate being made of pure titanium, and wherein the first substrate is made of two layers, an outer thick layer and an attachment layer, the attachment layer forming an interface between the outer layer (1E) and the underlying substrate.

In some embodiments, the attachment layer is a PVD or CVD deposited layer. Direct welding of Titanium and steel cannot be done. However, the inventors have shown that if the deposition is previously carried out on each thin layer of titanium on steel, it is possible to later do the coating by means of cladding.

In some embodiments, the underlying substrate is made of a titanium alloy, the first substrate being made of pure titanium.

In some embodiments, the underlying substrate is made of a composite material, the first substrate being a blank made of pure titanium and having a thickness comprised between 0,1 and 4 mm.

In some embodiments, the composite material comprises glass fibre, carbon fibre or structural plastic.

In some embodiments, the system comprises means for inputting the surface area to be protected, such that the power source can provide a current that guarantees that the inventive current density threshold is attained.

In some embodiments the power source is configured for inverting the polarity of the second substrate to avoid precipitation of calcareous salts on their surface and the reduction of the working area.

In some embodiments, the underlying substrate is made of an inner metal layer and an outer layer made of isolation material, the first substrate being a blank made of pure titanium and having a thickness comprised between 0,1 and 4 mm, the blank being attached to the outer layer.

Preferably, the metal layer can be made of steel, aluminium, bronze, copper or iron based alloys suitable for forming ship hulls, pipes, heat exchangers, propellers, shafts or any component that can be subjected to biofouling.

The invention also relates to a structure provided with a system according to any of the variants of the electrolytic system according to the invention.

The invention can also be applied heat exchangers, pipes or any structure that can be immerged and subjected to biofouling. Therefore, the invention also relates to a heat exchanger, a pipe, propeller, shafts, tidal turbines provided with an electrolytic system according to any of the inventive variants.

In the case where the inventive system is applied to a pipe, the pipe comprises an inner layer that corresponds to the first substrate, an intermediate layer that corresponds to a structural material to confer it rigidity (for example polypropylene, polyethylene, fiberglass or PVC), and an outer metallic layer that forms the second substrate. In some embodiments of the pipe, the outer layer may also be titanium or titanium based, and in such a case the electrical power source may be configured to alternate polarity.

Finally, the invention relates to a method for defouling a ship hull, a pipe, a heat exchanger, a propeller or a shaft using an electrolytic system according to any of the preceding claims, wherein the ship hull, the pipe, the heat exchanger, the propeller or the shaft has a first substrate area immerged in water, which comprises:
- calculating the first substrate area;
- setting the electrical power source such that it provides an anode potential greater than or equal to 6V and such that it provides a current resulting in a current density greater than or equal to 30 mA/m² in the first substrate.

Preferably, according to the method, the second substrate is titanium or activated titanium and the electrical power source is configured for alternating its polarity and providing a current density greater than or equal to 30 mA/m² on the surface and an anode potential greater than or equal to 6V.

According to a variant of the method, the first substrate could be a first part of a ship's hull, the second substrate could be a second part of the ship's hull, both made of titanium or titanium based, so that the protection would be alternated.

According to another variant, the first substrate could be a first part of the ship's hull, the second substrate could be a propeller or the propulsion system shafts.

According to another variant of the method, when the method is applied to a heat exchanger, one group of tubes or plates of the exchanger can be the first substrate and another group of tubes or plates to be the second substrate, both based on titanium, so that with a single system is sufficient, and auxiliary counter electrodes are not necessary.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

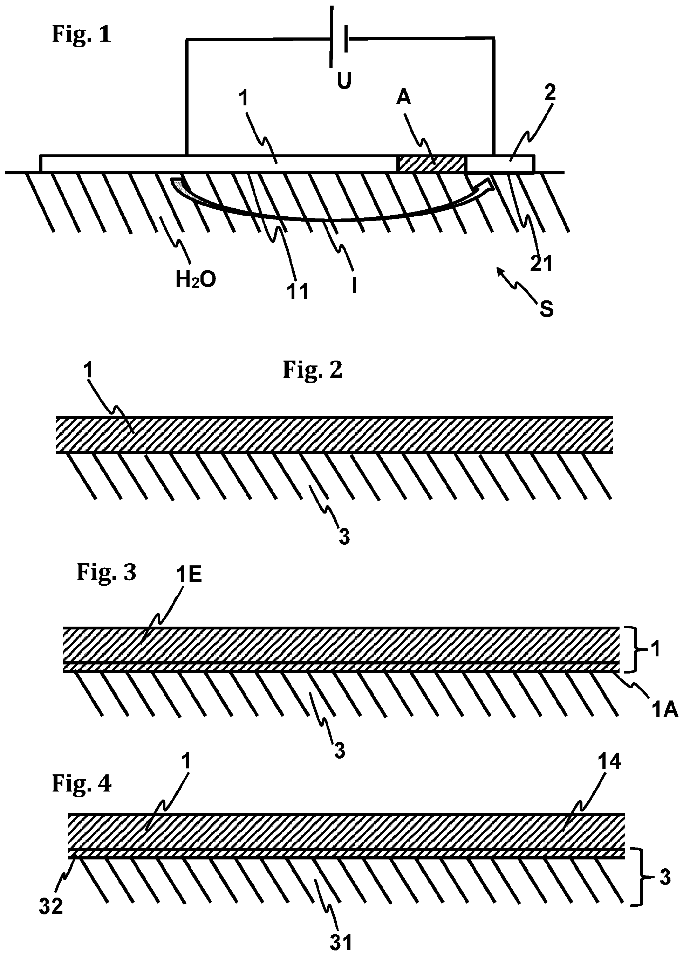

Figure 1 shows a diagram of the system according to the invention.
Figure 2 shows a layer scheme according to an embodiment of the invention wherein the titanium layer is adhered to a third substrate.
Figure 3 shows a layer scheme according to an embodiment of the invention wherein the underlying substrate is in turn formed by the third substrate and an interface layer.
Figure 4 shows a layer scheme according to an embodiment of the invention wherein the titanium is a blank adhered to the substrate with the interposition of an isolation material.
Figure 5 shows a titanium plate that has been immersed and to which a potential of 3 V_{Ag/AgCl} was applied.
Figure 6 shows an experimental setup on a ship's hull, and the adhesion result after immersion for a few months.
Figure 7 is a zoomed photography of figure 6.
Figures 8 to 11 show plates of a system where tensions below 6 V were applied.
Figures 12 to 16 show plates of a system according to the invention.
Figures 17 shows another plate used in the inventive conditions where an alternating signal has been applied.

### DESCRIPTION OF A WAY OF CARRYING OUT THE INVENTION

To arrive at the claimed subject matter, tests were carried out by applying electrical signals in different ways. From potentiostatic control, galvanostatic control, constant voltage pulses, to alternate pulses or periodic pulses. The tests were standardized by using grade 2 titanium electrodes for both the anode and the cathode. Test were also performed using other material for the cathode, like for example steel.

In the initial stages, the system evolves over time and the resistance of the anode varies considerably due to the anodizing that occurs on its surface. The resistance of the system increases as time passes. Salts precipitate on the cathode and the resistance increases. This an expected effect.

Then the following tests were carried on by applying a constant voltage. The system current follows Ohm's law and it must be taken into account that the system resistance changes over time due to the reactions that occur on the electrodes, mainly the anodizing reaction produced in the titanium anode. In all the tests, both the current and the tension were measured.

As a summary, the inventor, as will be made evident below, concluded from the tests that there is a critical current from which an antifouling effect on the titanium surface begins to be observed. Below that current, even though the electrode is anodically polarized, algae continue to grow. That is why the effect of the counter electrode and anodizing is important.

When the applied voltage is less than 6V, an effect on the biofouling is seen but the biofouling is not completely eliminated.

The following table shows the parameters used in the non-successful tests (plate used was 0,6 m² in area):

| **Current** | **Applied tension** | **Anode Potential** | **Current density mA/m2** |
|---|---|---|---|
| 17,7mA | 5,5V | 5,45V_{AgAgCl} | 28,3 |
| 14,6mA | 5,5V | 5,32V_{AgAgCl} | 24,3 |
| 14,4mA | 5,31V | 5,31V_{AgAgCl} | 24,0 |
| 13mA | 5,13V | 5V_{AgAgCl} | 21,7 |

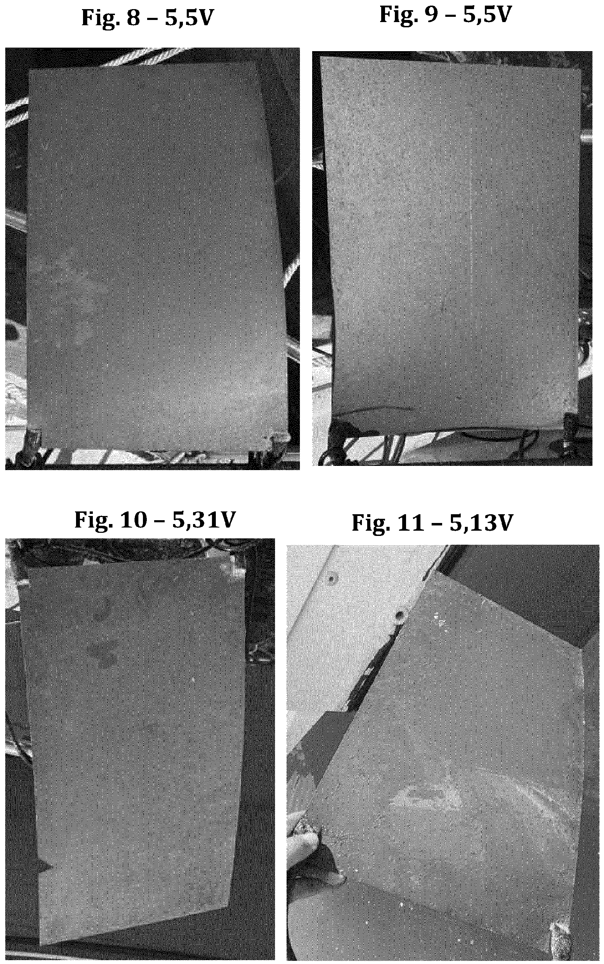

Figures 8 to 11 show the plates subjected to these conditions: none of them shows a satisfactory result. We point out that these tensions are already clearly above the voltages suggested in the prior art, and were disclosed as effective in preventing the adhesion of microorganisms. Under these polarization conditions, the plates shown a lower level of biofouling than plates without polarization, but the results are not satisfactory.

Then, tests were carried for tensions above 7V, and the results are summarized in the following table:

| **Current** | **Applied tension** | **Anode Potential** | **Current density mA/m2** |
|---|---|---|---|
| 19mA | 7,7V | 6,61V_{AgAgCl} | 31,7 |
| 23,4mA | 7,5V | 6,96V_{AgAgCl} | 39,0 |
| 17,9mA | 7,5V | 7,05V_{AgAgCl} | 29,8 |
| 19mA | 8,2V | 7,84V_{AgAgCl} | 31,7 |

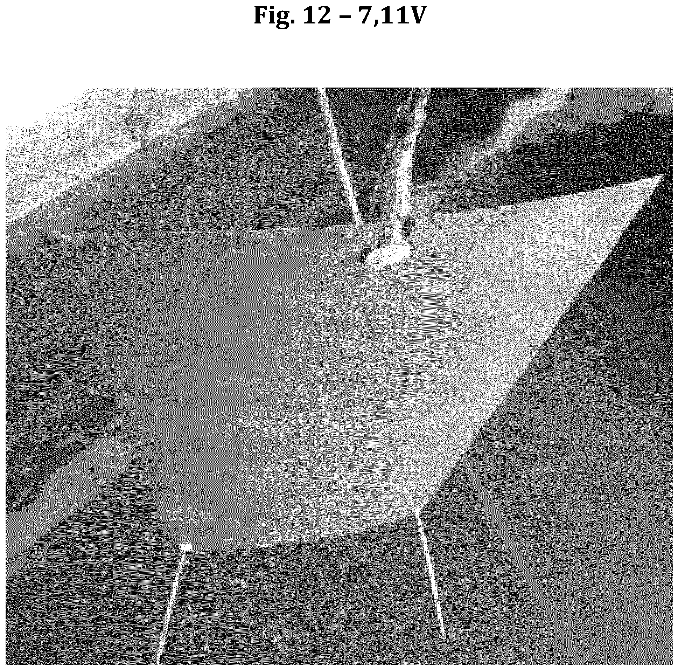

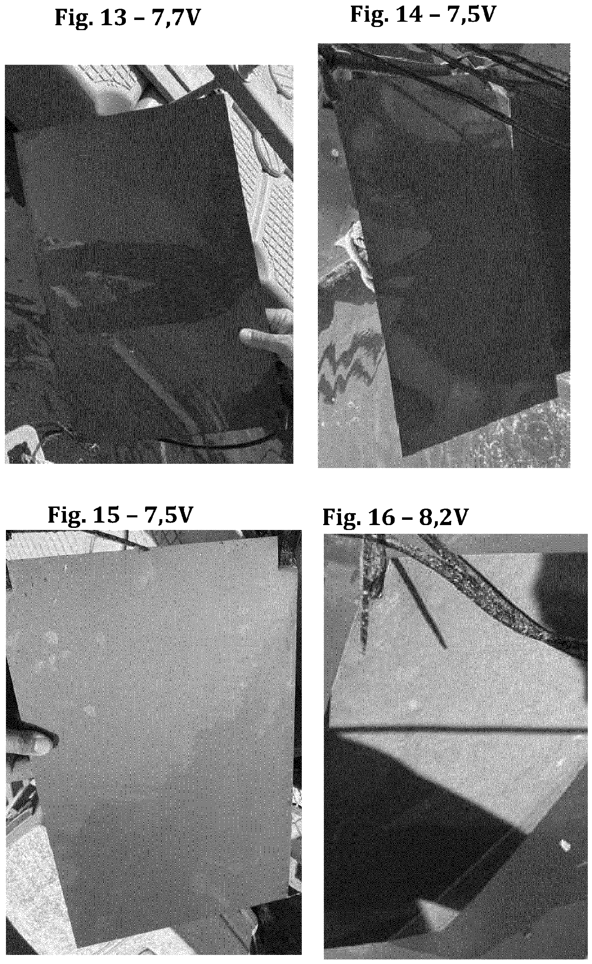

Figures 12 to 16 show the plates subjected to these conditions: all of them show practically no microorganisms adhesion.

### Comparison tests

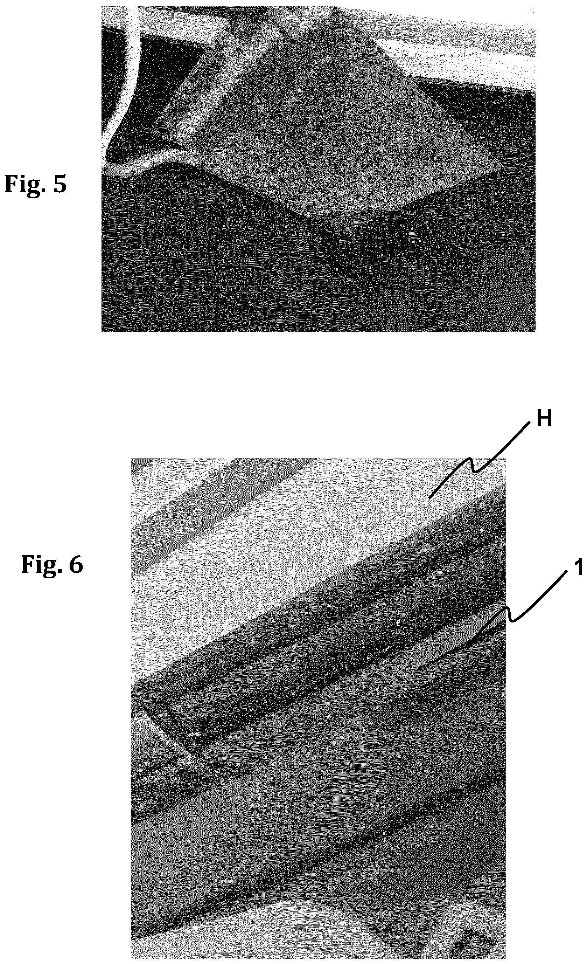

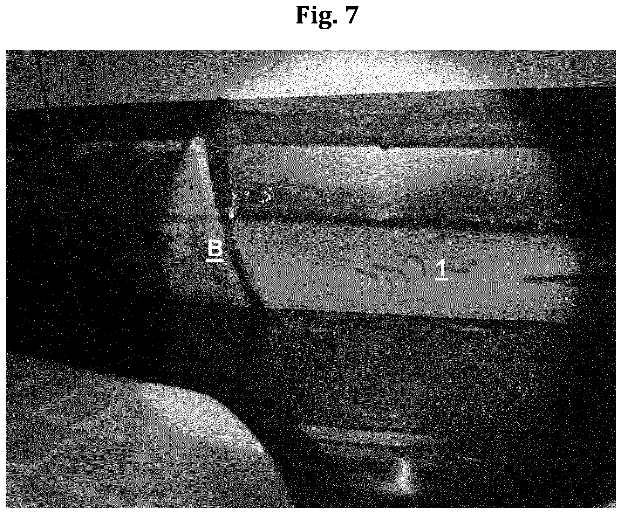

The Fig 6 and 7 effect has been achieved by applying a voltage of 7,5 V and a current over 30 mA/square meter during 8 months. The photo shows clearly that there is not a single barnacle B in the titanium.

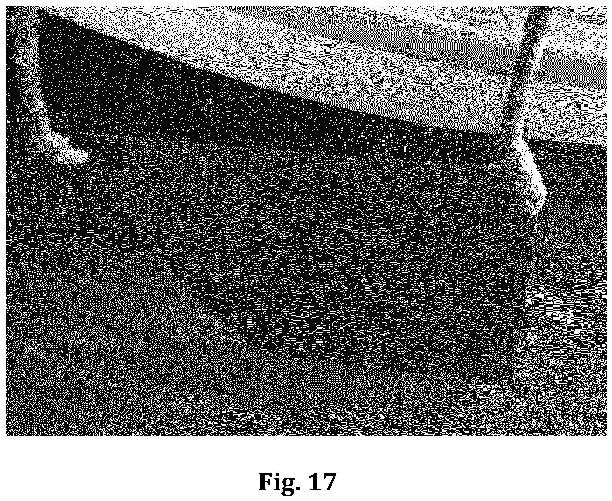

Fig 17 shows another sample that was immerged for four months, in this case under alternating pulses. Nor a single adhesion was seen on the blank, but the cables, subjected to the same conditions, are fully covered in algae.

Finally, the inventor has developed a layered structure that can be used in the context of the invention. This layered structure, which can be considered an invention by itself, comprises the following layers:
- an underlying substrate made of steel;
- a first substrate being made of titanium; and wherein
the first substrate is made of two layers, an outer thick layer 1E and an attachment layer 1A, the attachment layer 1A forming an interface between the outer layer 1E and the underlying substrate 3, and the attachment layer 1A being a PVD or CVD deposited layer.

In this layered structure, first substrate made of titanium can be pure titanium and/or a titanium alloy.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. Electrolytic system (S) for defouling comprising a first substrate (1), the first substrate (1) comprising titanium, wherein a surface (11) of the first substrate (1) intended to be in contact with water is defined in the first substrate (1), a second conductive substrate (2) provided with a surface ( 21) intended to be in contact with water, the electrolytic system (S) comprising an electrical power source (U), the electrical power source (U) being connected in series between the first (1) and second ( 2) substrate, so that an electrolytic circuit can be established formed by water, the first substrate (1), which operates as anode, the second substrate (2) which operates as cathode, and the electrical power source (U) that provides electrical energy, **characterized in that** the power source (U) is configured to provide a current density greater than or equal to 30 mA/m² on the surface and an anode potential greater than or equal to 6V_{Ag/AgCl}.

2. Electrolytic system according to claim 1, which comprises a reference electrode connected to the first substrate (1) and/or the second substrate (2),

3. Electrolytic system according to claim 1, which comprises an underlying substrate (3), the first substrate (1) being attached to the underlying substrate (3).

4. Electrolytic system according to claim 3, wherein the underlying substrate (3) is made of steel, aluminium or bronze, the first substrate (1) being made of pure titanium, and wherein the first substrate is made of two layers, an outer thick layer (1E) and an attachment layer (1A), the attachment layer (1A) forming an interface between the outer layer (1E) and the underlying substrate (3), and preferably the attachment layer (1A) is a PVD or CVD deposited layer.

5. Electrolytic system according to claim 3, wherein the underlying substrate (3) is made of a titanium alloy, the first substrate (1) being made of pure titanium.

6. Electrolytic system according to claim 3, wherein the underlying substrate (3) is made of a composite material, the first substrate (1) being a blank (14) made of pure titanium and having a thickness comprised between 0,1 and 4 mm.

7. Electrolytic system according to claim 6, wherein the composite material (3) comprises resins, glass fibre, carbon fibre and/or structural plastic.

8. Electrolytic system according to claim 3, wherein the underlying substrate (3) is made of an inner layer (31) made of metal and an outer layer (32) made of isolation material, the first substrate (1) being a blank (14) made of pure titanium and having a thickness comprised between 0,1 and 4 mm, the blank (14) being attached to the outer layer.

9. Electrolytic system according to any of the preceding claims, wherein the first substrate (1) is divided in a plurality of substrates.

10. Electrolytic system according to any of the preceding claims, wherein the power source (U) is configured for inverting the polarity of the second substrate (2) to avoid precipitation of calcareous salts on their surface, the reduction of the working area, and reduce the needs of counter electrodes.

11. Electrolytic system according to claim 10, wherein the second substrate (2) is titanium or activated titanium or a consumable electrode, and/or the electrolytic system can comprise a plurality of second substrates and the electrolytic is configured so that at least one of the second substrates (2) is subjected to the same potential by the power source as the first substrate (1), so that this at least one of the substrates works as an anode to eliminate the calcareous salts that may have precipitated on its surface.

12. Ship, pipe, heat exchanger, propeller or shaft provided with an electrolytic system (S) according to any of the preceding claims.

13. Assembly comprising a pipe and an electrolytic system according to claim 1, comprising an inner layer that corresponds to the first substrate (1), the pipe comprising an intermediate layer that corresponds to a structural material to confer it rigidity, and comprising an outer metallic layer that corresponds to the second substrate (2).

14. Method for defouling a ship hull, using an eelectrolytic system (S) according to any of the preceding claims, which comprises:
- Calculating the first substrate area;
- Setting the electrical power source (U) such that it provides an anode potential greater than or equal to 6V and such that it provides a current resulting in a current density greater than or equal to 30 mA/m² in the first substrate.

15. Method for defouling a ship hull according to claim 14, wherein the second substrate is titanium or activated titanium wherein the electrical power source (U) is configured for alternating its polarity and providing a current density greater than or equal to 30 mA/m² on the surface and an anode potential greater than or equal to 6V.
